# EUROPEAN PATENT APPLICATION

(11) **EP 4 786 811 A1**
(43) Date of publication of application: **05.08.2026**
(21) Application number: 25155852.4
(22) Date of filing: 04.02.2025
(51) Int. Cl.: F16C 33/24, H02K 7/08

(54) **BUSHING FOR A HIGH SPEED ELECTRICAL MACHINE**

(71) Applicant: Celeroton TurboCell AG, 8604 Volketswil (CH)
(72) Inventor: BOSSHARD, Daniel, 8604 Volketswil (CH); LOOSER, Andreas, 8604 Volketswil (CH); BLASER, Manuel, 8604 Volketswil (CH); DIETZ, Flurin, 8604 Volketswil (CH); DENZLER, Dario, 8604 Volketswil (CH)
(74) Representative: Frei Patent Attorneys

(57) **Abstract**

An electrical machine comprises a stator with a stator body (25) supporting an electrical stator (33) and a rotor (5) supported by means of a gas bearing comprising radial and an axial gas bearing sections (22, 32). The radial bearing, on the stator side, comprises a bushing (18). The bushing (18) comprises an inner sleeve (181) and an outer sleeve (182),
• the inner sleeve (181) being made of a material having a low CTE (coefficient of thermal expansion), the CTE being lower than 7E-6 K^-1,
• the outer sleeve (182) being made of a material having a tensile strength higher than 50 MPa, and/or having an elongation at break higher than 2%.

In the event of the inner sleeve being damaged or broken, it can be stabilised, and the bushing can be kept gas-tight, by the outer sleeve, which is more resistant to breakage.

## Description

The invention relates to the field of electrical machines, in particular to high-speed electrical machines with gas bearings, and to a bushing for such a machine.

An electric motor generally comprises a rotor and a stator, the stator comprising a stator body supporting and housing an electrical stator and bearings. The position of the bearings relative to the stator body can be defined by bearing flanges of the stator body. Often, two journal bearings are present, typically located at opposite sides of the stator. The precision of the alignment of the bearings in this case is mainly defined by the precision with which the bearing flange and stator body are machined. With fluid film and in particular for gas bearings, precise alignment is crucial and this arrangement in general requires special measures such as self-aligning or compliant bushing mountings, or machining, e.g. reaming, of the pair of bearings after assembly. Alternatively, the journal bearings can be arranged on the same side of the stator. This arrangement is often called overhanging motor design. With the overhanging design, the two journal bearings can be integrated into a single part, thus precise bearing alignment is easier to achieve.

WO 2017/202941 A1 discloses an electrical machine and associated rotor which address the abovementioned issues by supporting the rotor by means of a radial bearing section forming a radial gas bearing and an axial bearing section forming an axial gas bearing, the stator side parts of these bearing sections being a stator side radial bearing part and a stator side axial bearing part which are rigidly connected to one another and together form a stator bearing structure. In embodiments, the stator side axial bearing part is rigidly mounted to other parts of the stator, and the stator side radial bearing part is elastically supported or not supported at all, except by its attachment to the stator side axial bearing part.

WO 2020/002509 A1 discloses an electrical machine comprising a stator with a stator body supporting an electrical stator and a rotor, the rotor being supported by means of a bearing comprising a radial bearing section forming a radial gas bearing and an axial bearing section forming an axial gas bearing. The stator side parts of these bearing sections are a stator side radial bearing part and a stator side axial bearing part which are rigidly connected to one another and together form a stator bearing structure. Therein, the stator side radial bearing part is a bushing. The bushing is radially surrounded by a cooling body, and the bushing is connected to the cooling body by an elastic support comprising a thermally conducting filler.

WO 2024/223478 A1 discloses an electrical machine wherein the bushing is aligned relative to the stator body by the bushing being aligned relative to a reference body and by the reference body being aligned relative to the stator body.

WO 2024/223479 A1 discloses an electrical machine with a stator comprising a stator body supporting an electrical stator and a rotor, the rotor being supported by means of a bearing comprising a radial bearing section forming a radial gas bearing and an axial bearing section forming an axial gas bearing, the stator side parts of these bearing sections comprising an axial bearing assembly and a bushing. Therein, the bushing is radially surrounded by the stator body, and a coolant gap is present between the bushing and the stator body. The coolant gap can extend around the entire circumference of the bushing. A fluid coolant medium is present in the coolant gap.

WO 2023/280 893 A1 discloses a stator bushing for a high-speed electrical machine with air bearings, the stator bushing comprising an inner sleeve made of a metal material and an outer sleeve made of a ceramic material. The outer sleeve is made thicker than the inner sleeve, thereby dominating the total CTE (coefficient of thermal expansion) resulting from the combination of the two materials

Electrical motors as described above can be used to drive high speed compressor. In the event that a bushing breaks during operation, a working fluid of the compressor can be contaminated - depending on the construction of the motor - by a thermally conducting filler and/or by the fluid coolant medium. The contaminated working fluid can reach and damage subsequent components of a plant in which the compressor is arranged.

When driving a turbo compressor with a low-speed electrical machine typically running at 3000 RPM or 3600 RPM, a gearbox is required to achieve the high rotational speed a turbo compressor requires. Such a construction requires seals to separate the working fluid of the compressor from the oil in the gear box. The use of a high-speed electrical machine in turbo machines does not require a gear box, and the need for sealing the rotating parts is eliminated. The rotor can run within the working fluid of the compressor, which means that the compressor housing needs to encapsulate the rotor in a gas tight manner. One method of doing this is to use the bushing as part of an air tight barrier between the rotor and its environment. Typically, the bushing material is made from ceramic or another material with low thermal expansion and high hardness, which generally implies high stiffness. The compressor housing is typically made from a material like aluminium, steel or even polymer, which have a relatively high thermal expansion coefficient. Depending on gas pressure, material compatibility and safety levels, sealing between bushing and compressor housing is a challenge.

It is therefore an object of the invention to create a high-speed electrical machine of the type mentioned initially, which overcomes at least some of the disadvantages mentioned above. In particular, a possible object is to avoid contamination of a working fluid in the event of a failure. Another possible object is to protect the environment of the rotor from being exposed to a working fluid.

These objects are achieved by a high-speed electrical machine according to the claims.

The term "high-speed electrical machine" is understood to cover machines that are suited for more than 100'000 revolutions per minute.

According to a first aspect, an electrical machine comprises a stator with a stator body supporting an electrical stator and a rotor, the rotor being supported by means of a bearing comprising at least one **radial bearing section** forming a radial **gas** bearing and an **axial bearing section** forming an axial **gas** bearing, the stator side parts of these bearing sections comprising an **axial bearing assembly** and a **bushing,** the electrical machine comprising a longitudinal axis coinciding with an axis of rotation of the rotor. Therein, the bushing comprises an **inner sleeve** and an **outer sleeve,**
- the inner sleeve being made of a material having a low CTE (coefficient of thermal expansion), the CTE being lower than 7E-6 K^-1, in particular lower than 5E-6 K^-1, in particular lower than 4E-6 K^-1;
- the outer sleeve being made of a material having a tensile strength higher than 50 MPa, and/or having an elongation at break higher than 2%.

Consequently, the inner sleeve of the bushing is made of a material with a low temperature coefficient, and can be made of a hard, wear-resistant material, with its inner surface comprising bearing surfaces of the rotary bearing. The outer sleeve is made of a softer, ductile material that, in the event that the inner sleeve breaks, does not break and thereby maintains a secure media separation between the inside and the outside of the bushing. That is, coolant media and/or particles in the vicinity of the bushing do not reach a volume in which a working medium of the machine is present.

In embodiments, one or more of the following is the case:
- the inner sleeve is made of a ceramic-type material, in particular SiC or SiN;
- the outer sleeve is made of a metal-type material, in particular aluminium, titanium or steel, in particular stainless steel;
- the outer sleeve is made of a plastic-type material, in particular PEEK or fiber-reinforced plastic.

In summary, a **first type** of material, which can also be called **ceramic-type material,** is used for the **inner sleeve.** In embodiments, the first type material has one or more of the following properties:
- low CTE: lower than 7E-6 K^-1, or 5E-6 K^-1 or 4E-6 K^-1;
- high hardness: HK5 (Vickers hardness) higher than 10 GPa, or 15 GPa, or 20 GPa.

Typical materials of the first type are: Ceramic materials, more specifically Si₃N₄, SiC, Al₂O₃, Further alternatives are: iron-nickel alloys (such as Invar), glass-ceramics, tungsten carbide, carbide metals.

In summary, a **second type** of material, which can also be called **metal-type material,** can be used for the **outer sleeve.** In embodiments, the second type material has one or more of the following properties:
- a tensile strength higher than 100 MPa, in particular higher than 500 MPa,
- an elongation at break higher than 2%, in particular higher than 5%, in particular higher than 10%, in particular higher than 20%.

Typical materials of the second type are: Aluminium including aluminium alloys, titanium, titanium alloys or steel, in particular stainless steel or high-strength and hard steels.

In summary, a **third type** of material, which can also be called **plastic-type material,** can be used for the **outer sleeve.** In embodiments, the third type material has one or more of the following properties:
- a tensile strength higher than 50 MPa, in particular higher than 100 MPa, in particular higher than 400 MPa,
- an elongation at break higher than 2%, in particular higher than 5%, in particular higher than 10%.

Typical materials of the third type are: PEEK, fiber-reinforced PEEK, or another fiber-reinforced plastic. Such materials can have different combinations of properties that are suited to absorb mechanical energy in the event of a rotor failure. For example, the tensile strength can be relatively low, below 200 MPa, but with a relatively high elongation at break, higher than 50%. This is the case, for example, for PEEK. Or the elongation at break can be relatively low, below 5%, but with a relatively high tensile strength, higher than 400 MPa. This is the case, for example, for fibre reinforced PEEK.

In embodiments, the outer sleeve extends along at least 60% or 70% or 80% or 90% or 100% of the inner sleeve.

In embodiments, the outer sleeve extends along at least 60% or 70% or 80% or 90% or 100% of a rotor body section in which rotor side radial bearings are present. These can be embodiments of an overhanging motor design, in which the outer sleeve extends in a region of an electrical motor, serving as a gap tube.

In embodiments, the outer sleeve extends along at most 50% or 40% or 30% of a rotor body section in which rotor side radial bearings are present. These can be embodiments of a centred motor design in which the magnet section and the centre of the electrical stator are located, when seen along the axis of rotation, between two radial bearing sections or overlapping at least one of the radial bearing sections. Because as a rule the coolant gap, which is defined by the outer sleeve, does not overlap a motor section, the outer sleeve is shortened.

Typically, the outer sleeve extends at least along a cooling section of the bushing, that is, a section along the longitudinal axis in which the bushing is designed to be in contact with a fluid coolant medium.

In embodiments, in a radial bearing section along the bushing, a corresponding **circumferential gap** is present between the inner sleeve and outer sleeve. In particular at least one of the following is the case:
- the gap is adjacent to an end of the outer sleeve;
- the gap is filled with a sealant material, establishing a sealing of a region between the inner sleeve and outer sleeve.

A radial bearing section is a section along the longitudinal axis of the machine in which a radial bearing is present. Such a radial bearing can be defined by features on the inner surface of the bushing, or on the outer surface of the rotor, or both. Such features can be called radial bearing elements.

The gap has the effect that in the region of the gap, the outer sleeve does not constrict and potentially deform the inner sleeve, and thus does not deform the inner surface of the bushing and/or radial bearing elements present in the radial bearing section. So, the outer sleeve can be joined to the inner sleeve by a press fit or force fit without affecting the precision of the radial bearing.

In embodiments, the gap is created by the inside of the outer sleeve having a larger radius in the radial bearing section than other sections of the outer sleeve. In embodiments, the gap is created by the outside of the inner sleeve having a smaller radius in the radial bearing section than other sections of the inner sleeve. In embodiments, a difference between the inner diameter of the outer sleeve and the outer diameter of the inner sleeve, creating the gap, lies between 0.01 and 2 or 5 or 10 or 20 Millimetres.

In embodiments, one or more sections along the longitudinal axis in which the force fit between the inner sleeve and outer sleeve is present are distanced from the radial bearing sections, along the longitudinal axis, by least one or two Millimetres. This reduces or eliminates an effect of a deformation by the force fit on the radial bearings.

In embodiments, the outer sleeve has a thickness of at most five Millimetres.

This has the effect that the thermal expansion of the bushing is dominated by the thermal coefficient of the inner sleeve, and not by that of the outer sleeve.

In more general terms: In embodiments, the product of the Young's Modulus and the thickness of the inner sleeve is at least two times the product of the Young's Modulus and the thickness of the outer sleeve, in particular at least three times, more in particular at least five times.

In embodiments, the outer sleeve is shaped to have at least one outer **circumferential groove,** with a radial elastic support arranged in the groove.

This allows to elastically support the bushing in the stator body, with its exact position and alignment relative to the stator body being determined by a stator side axial bearing part.

Furthermore, the elastic support can act as a gasket, separating a coolant fluid from a working fluid. The elastic support can be an O-Ring. If the outer sleeve were not present, such an O-ring could be in contact with a ceramic bushing. The porosity of the bushing would compromise the gas-tightness of the gasket formed by the O-ring. If the outer sleeve is present and the O-ring is in contact with the outer sleeve rather than the ceramic inner sleeve, this issue is avoided.

In embodiments, the bushing is called a stator side radial bearing part. The stator side radial bearing part and the stator side axial bearing part, or an alignment element, can be rigidly connected to one another and together form a stator bearing structure.

In embodiments, the stator side axial bearing part or the alignment element is rigidly mounted to other parts of the stator, such as the stator body, and the stator side radial bearing part is elastically supported in the stator body or not supported at all, except by its attachment to the stator side axial bearing part.

In embodiments, the stator side **radial** bearing part is rigidly mounted to other parts of the stator, such as the stator body, and the stator side **axial** bearing part is elastically supported in the stator body or not supported at all, except by its attachment to the stator side radial bearing part.

Both of the preceding embodiments allow to manufacture the stator bearing structure to high degree of precision, including the alignment between the axial and radial bearings, and to make the stator bearing structure, when mounted in the stator, independent of inaccuracies or thermally induced shape changes in the stator.

In embodiments,
- the bushing extends along the longitudinal axis of the electrical machine,
- in a first section along the axis the outer sleeve is present,
- in a second section along the axis the outer sleeve is not present, and
- the inner sleeve extends along the first and the second section and in the second section serves as a gap tube between the electrical stator and the rotor.

As a result, the outer sleeve is not present in the region of the electrical motor. This saves space and allows to reduce the gap of the electrical motor. It also removes constraints on the material of the outer sleeve. For example, the outer sleeve can be made of an electrically conducting material, which would not be allowable if it were to extend into the gap.

In embodiments, the outer sleeve extends into the region of the electrical stator and is made of an electrically nonconducting material, such as PEEK (polyether ether ketone). In embodiments, only the outer sleeve extends into the region of the electrical stator. In embodiments, both the inner sleeve and the outer sleeve extend into the region of the electrical stator.

According to a second aspect, an electrical machine comprises a stator with a **stator body** supporting an electrical stator and a rotor, the rotor being supported by means of a bearing comprising at least one **radial bearing section** forming a radial **gas** bearing and an **axial bearing section** forming an axial **gas** bearing, the stator side parts of these bearing sections comprising an **axial bearing assembly** and a **bushing,** the electrical machine comprising a longitudinal axis coinciding with an axis of rotation of the rotor. Therein
- the bushing is rigidly attached to a **reference body,**
- the reference body is aligned with the stator body,
- all connections between the bushing and the stator body other than the connection through the reference body are elastic supports,
- for forming a gas-tight seal between the outer side of the bushing and the stator body, a layer of adhesive or filler is arranged between an outer side of the bushing and an inner side of the stator body, along the circumference of the bushing and in a region adjacent to the axial bearing section.

This creates a seal between the potentially aggressive or corrosive working fluid and the parts of the stator. The adhesive or filler can be an epoxy-based adhesive or filler. Using an adhesive or filler instead of an O-ring has the advantage that given the porous surface of a ceramic bushing the sealing is more reliable. Relative to the other, rigid, mechanical connections, the connection through the adhesive can be considered to be elastic.

The reference body can be an inner stator disc of the axial bearing section.

In embodiments, the stator body comprises **a main body** and a **stator flange,** the stator flange being removably attached to the main body, and the layer of adhesive being arranged between the outer side of the bushing and an inner side of the stator flange.

This makes it possible to remove the bushing although it is glued to the stator body, by separating the stator flange from the main body. The stator flange can be attached to the main body by a rigid, positive mechanical connection such as screwing or clamping.

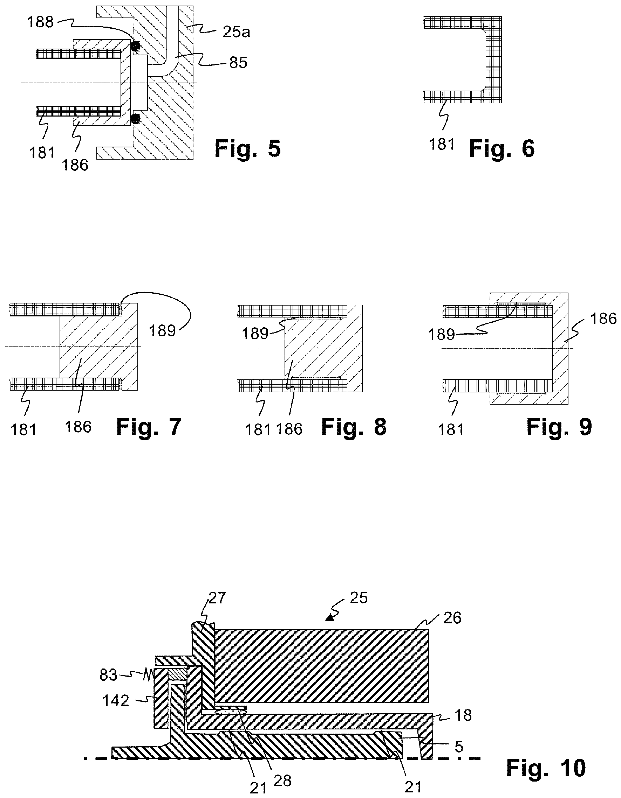

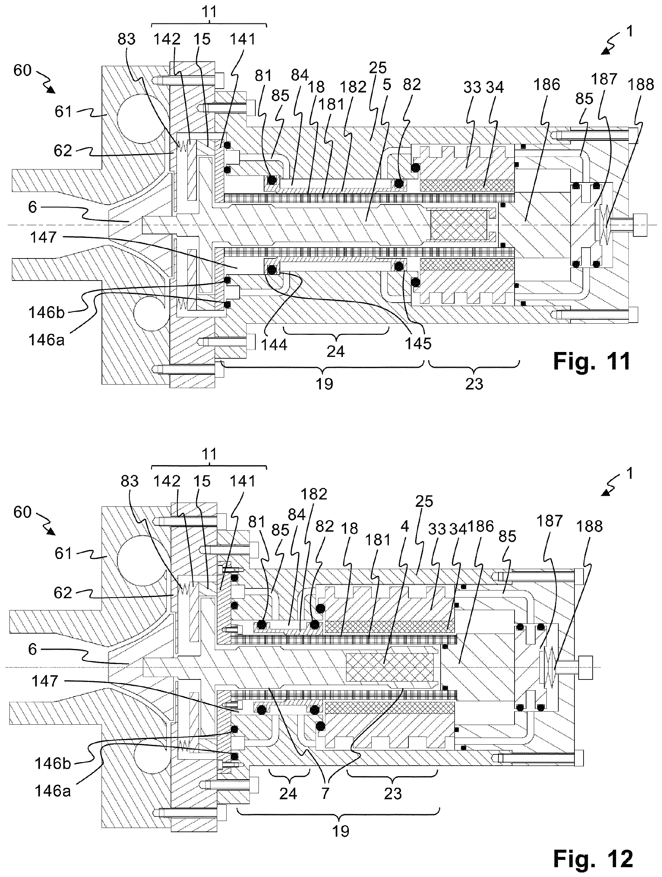

From a structural point of view, considering by which means the position of the rotor in the stator body is defined, the function and relation of the stator flange in embodiments as in **Figure 10** and of the outer sleeve in embodiments such as in **Figure 11** can be considered to be the analogous:
- In the fonner embodiments, the bushing as a whole is aligned to the stator body via the stator flange, and a sealing adhesive can be present between the two.
- In the latter embodiments, the inner sleeve is aligned to the stator body via the outer sleeve, and a sealant can be present between the two.

In embodiments, for containing a working fluid present inside the bushing, the bushing is at one end closed, by means of a closure, in a gas-tight manner with respect to a volume surrounding that end of the bushing.

This end is the end opposite to the end at which the axial bearing is present.

In a typical application, the rotor drives a compressor for a working fluid - wherein the term "fluid" includes gases - and the working fluid is present in the fluid axial and radial bearings for the rotor. During normal operation it is contained in the bushing and does not reach the electrical motor where it could induce corrosion, if the working fluid is of an aggressive nature.

In embodiments, the closure of the bushing is formed integrally with the bushing.

In embodiments, the closure of the bushing is formed with a **sealing element,** *in particular* wherein the sealing element is one of
- a removable plug;
- a plug bonded to the bushing.

A removable plug allows access to the inside of the bushing for inspection, for example, for measuring temperature or displacement of the rotor.

In embodiments, the plug is bonded to the bushing by one of glass fusing, soldering or adhesive bonding.

In embodiments, the outer sleeve is present in the region of the gas-tight seal, and instead of the layer of adhesive, an O-ring is present. This allows to remove the bushing from the stator body and can eliminate the need for a removable stator flange.

In embodiments, the electrical machine comprises a **heat transfer element** arranged to transfer heat away from the bushing, the heat transfer element being pressed against the bushing along the longitudinal axis by means of an **axially resilient element.**

Thus, the axially resilient element presses the heat transfer element against the bushing at a contact surface through which a heat transfer can take place during operation of the machine. The axially resilient element allows for compensation of differences in thermal expansion of the bushing and stator body.

In embodiments, a contact surface between the bushing, or a sealing element attached to the bushing, and the heat transfer element is substantially flat and at a right angle to the longitudinal axis.

As a result, the heat transfer element allows for movement of the adjacent end of the bushing in directions normal to the longitudinal axis. So, it does not affect the alignment of the bushing.

In embodiments, at least one of the following is the case:
- the heat transfer element is cooled by a flow of coolant medium;
- the heat transfer element is thermally coupled to the stator body by a heat conducting filler or fluid;
- the heat transfer element is thermally coupled to the stator body by a heat conducting elastic foil.

An elastic foil can be a gap pad or thermal pad. It can have a thickness of several millimetres, for example up to one or two or three millimetres.

In embodiments, the bushing is radially surrounded by the stator body, and
- a **coolant gap** is present between the bushing and the stator body in a longitudinal section along the bushing in which the outer sleeve is present,
- fluid channels are arranged to provide a flow of a fluid **coolant medium** through the coolant gap.

The coolant gap preferably extends around the entire circumference of the bushing,

In embodiments, the coolant gap extends along at least 60% or 70% or 80% or 90% or 100% of an **overall bearing section of the bushing,** the overall bearing section of the bushing being defined as a shortest section along the rotor axis comprising all radial bearing sections. This allows to cool a substantial part of the bushing, and to carry away heat generated in the bearing sections.

In embodiments, the coolant gap extends along at most 40% or 30% or 20% of the overall bearing section of the bushing. These can be embodiments of a centred motor design.

The features mentioned in the context of the first aspect can be implemented independently or in combination with those of first aspect, and vice versa. The first aspect relates to keeping the working fluid free from coolant fluid in the event of a rotor failure. The second aspect relates to keeping an aggressive working fluid away from sensitive regions of the motor.

Here and throughout this document, the terms "rigidly" and "fixed" are used as opposed to "elastically". An elastic connection has a spring rate or a Young's modulus that is at least, for example, 100 or 10'000 or 1'000'000 times larger than in a rigid connection.

A rigid connection is a connection designed such that the connected parts do not move relative to one another during normal operation of the machine. Thus, a rigid connection can be established by screwing parts together or by pressing them against one another with a spring. In this case, the spring is not part of the rigid connection but provides a force that maintains rigidity of the connection.

An elastic support can be an O-ring, typically of a (synthetic) rubber, or a metallic spring. In embodiments, an elastic support is implemented by a bonding agent, such as a glue, in particular an epoxy glue. In relation to other mechanical connections that define the relative position and/or orientation of parts, and in view of the very small displacements that need to be absorbed, such a glued connection can be considered to be elastic.

In embodiments, the electrical machine is of the slotless type. In other words, the electrical stator comprises an air gap winding rather than slotted windings. In other embodiments, the electrical machine is of the slotted type.

The gas of the gas bearing can be any gas the machine operates in, such as air, a cooling agent, natural gas etc. The gas bearing can be a passive or an active gas bearing.

Further embodiments are evident from the dependent patent claims.

The subject matter of the invention will be explained in more detail in the following text with reference to exemplary embodiments which are illustrated in the attached drawings, which schematically show:
- Figure 1: a rotor;
- Figure 2: an electrical machine comprising the rotor, with a bushing aligned via an axial bearing assembly;
- Figure 3: the bushing of Figure 2;
- Figure 4: a detail of Figure 2
- Figure 5: an alternative for cooling the bushing;
- Figure 6-9: alternatives for closing a distal end of the bushing;
- Figure 10: an adhesive between the bushing and a stator body;
- Figure 11: an electrical machine with the axial bearing assembly aligned via the bushing;
- Figure 12: an electrical machine with a centred motor design, with a motor section between or overlapping radial bearing sections.

In principle, identical or functionally identical parts are provided with the same reference symbols in the figures.

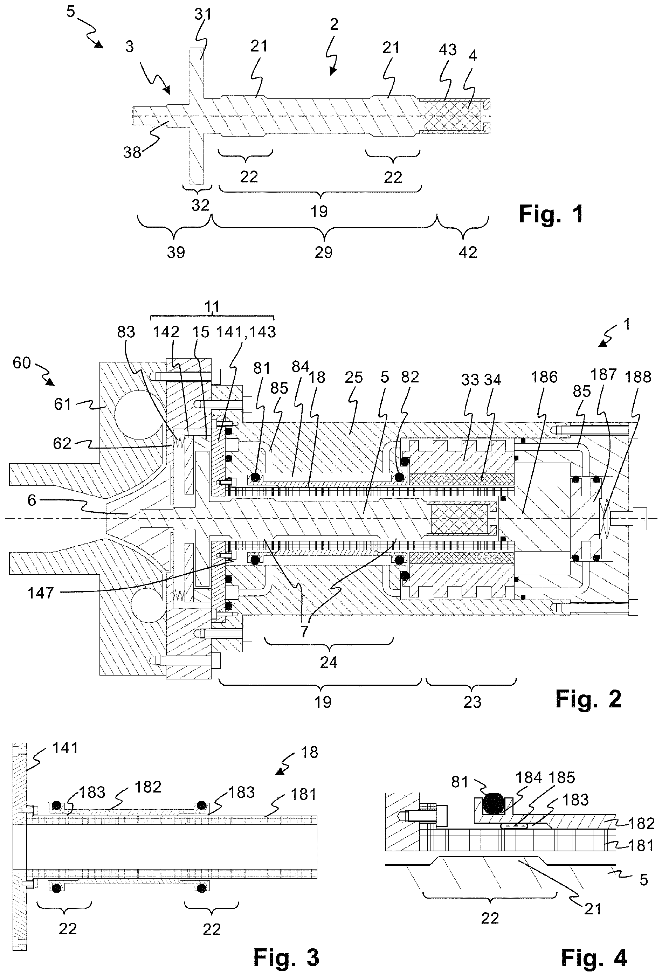

**Figure 1** schematically shows a rotor 5, with a rotor body 2 and a rotor end piece 3. The rotor body 2 has two rotor side radial bearings 21. The rotor end piece 3 comprises a rotor side thrust bearing plate or rotor side axial bearing 31. When seen along the rotor's axis of rotation, or longitudinal axis, for each rotor side radial bearing 21 a corresponding radial bearing section 22 is defined as a section along which the radial bearing 21 extends. This is the section in which the gas bearing generates radial forces. Usually, the radial bearing section has an at least approximately constant radial bearing gap. Likewise, an axial bearing section 32 s defined as section along which the rotor side axial bearing 31 extends. The rotor end piece 3 comprises an axial stub or rotor stub shaft 38 for carrying a part driven by or driving the rotor 5, for example an impeller, turbine, beam chopper, rotating prism, etc.

The rotor end piece 3 with the rotor stub shaft 38 and rotor side axial bearing 31 are arranged at a first or proximal end of the rotor body 2. At its opposite second or distal end, a permanent magnet 4 is joined to the rotor body 2 and arranged in a magnet sleeve 43. This represents an overhanging motor design. When seen along the rotor's axis of rotation, a rotor end section rotor end section 39, a rotor body section 29, and a magnet section 42 are defined as consecutive and adjacent sections along which the rotor body 2, rotor end piece 3 and permanent magnet 4 extend, respectively. An overall radial bearing section 19 shall be defined as a shortest section along the rotor axis comprising all radial bearing sections 22.

**Figure 2** shows a longitudinal section of a motor comprising the rotor 5 arranged in a stator 1, arranged to drive an impeller 6, thereby forming a turbo-compressor. The stator 1 comprises a stator body 25 in which the rotor 5 is rotatably arranged in a bearing comprising the axial bearing section 32 and the overall radial bearing section 19.

In the overall radial bearing section 19, radial journal bearings with a bearing air gap 7 between the rotor 5 and a bushing 18 are present. The bushing 18 is aligned relative to the stator body 25, with the alignment being established at one end of the bushing 18, proximal to the axial bearing assembly 11. At one or more locations along its length, the bushing 18 is elastically supported in the stator body 25 by means of radial elastic supports, in this case a first radial elastic support 81 and second radial elastic support 82 are shown. They can be implemented by O-rings. By having the alignment to the stator body 25 defined at only one end, and elastic connections elsewhere, the bushing 18 is not affected by deformations of the stator body 25, especially due to temperature changes.

In the axial bearing assembly 11, the rotor side axial bearing 31 or rotor disc is arranged to rotate between an inner stator disc 141 and an outer stator disc 142, separated by a spacer element 15. The inner stator disc 141 serves as a reference body 143 for aligning the bushing 18 with the stator body 25. The bushing 18 is aligned with and attached to the inner stator disc 141. An axial compensation element 83 compresses the axial bearing assembly 11 and also presses the axial bearing assembly 11 against the stator body 25, thereby establishing a rigid proximal alignment of the bushing 18 to the stator body 25, via the inner stator disc 141 or reference body 143. The axial compensation element 83 is compressed by an impeller assembly 60 attached to the stator body 25. In the present embodiment, the impeller assembly 60 comprises an impeller housing 61 and an intermediate part 62. An impeller 6 attached to the rotor stub shaft 38 of the rotor 5 is arranged to rotate in the impeller housing 61. The bearing structure shown can be implemented in another context, without the turbo-compressor elements such as the impeller 6 and impeller housing 61.

**Figure 3** shows just the bushing 18 with the attached inner stator disc 141. The present embodiment shows the bushing 18 with a flange screwed to the inner stator disc 141. Other ways of attaching the bushing 18 to the inner stator disc 141 can be implemented, as disclosed in WO 2024/223478 A1.

In embodiments not shown, the inner stator disc 141 and reference body 143 are separate elements. Generally, the inner stator disc 141 and/or the reference body 143 can be attached to the stator body 25 by means of fasteners such as screws.

The stator 1 comprises an electrical motor section 23, with an electrical stator 33 comprising a motor coil 34, the position of the electrical stator 33 along the longitudinal axis coinciding with the position of the permanent magnet 4 in the rotor 5. The bushing 18 extends into the motor section 23, with the bushing 18 - in particular only the inner sleeve 181 of the bushing 18 - acting as a gap tube of the motor.

A working fluid transported by the impeller 6 serves as bearing fluid for the axial and radial bearings and thus is free to flow into the space inside the bushing 18. In order to prevent it from flowing out of the bushing 18 at its distal end or motor end, a closure in the form of a sealing element 186 or plug is present at the distal end. A heat transfer element 187 is arranged to be pushed against the sealing element 186 by means of a rotor body section axially resilient element 188. This can be a pressure spring, or disc spring or a wave spring.

A contact surface between the sealing element 186 and the heat transfer element 187 is flat and at a right angle to the longitudinal axis. This allows, during assembly of the machine, the bushing 18 with the sealing element 186 to move, relative to the heat transfer element 187, in directions normal to the longitudinal axis.

Thanks to the axially resilient element 188, the sealing element 186 remains in physical contact with the heat transfer element 187, allowing for the transfer of heat from the bushing 18 to the heat transfer element 187. The heat can be transported away from the heat transfer element 187 by means of a coolant fluid flowing past the heat transfer element 187. In other embodiments, not shown, the heat is transported away from the heat transfer element 187 through a stationary heat conducting filler or fluid.

The stator 1 comprises fluid channels 85 to guide the coolant fluid along or through elements of the stator 1 that require cooling, such as the heat transfer element 187, the electrical stator 33 and the bushing 18. In order to cool the bushing 18, the coolant fluid flows through a coolant gap 84 between the outer sleeve 182 and the stator body 25. The coolant gap 84 runs around the circumference of the outer sleeve 182. A proximal and a distal end of the coolant gap 84 is blocked by the first radial elastic support 81 and the second radial elastic support 82, respectively. Thus, the main function of the elastic supports is to establish a seal between the outside of the outer sleeve 182 and the inside of the stator body 25. The seals being elastic allows for the alignment of the bushing 18 to be determined at the proximal end.

The section along the bushing 18 in which the coolant gap 84 is present and along which the coolant fluid can flow, is called cooling section 24. Typically, the coolant fluid is a liquid. In the event of a rotor failure, if the bushing breaks, it should be avoided that the coolant fluid flows into the bushing 18 and contaminates the working fluid, potentially damaging devices downstream of the machine. The danger of a hard, in particular ceramic bushing 18 breaking is high. For this reason, the outer sleeve 182 is present and is made of a less brittle material than the inner sleeve 181. Even if the inner sleeve 181 cracks or breaks, the outer sleeve 182 does not break, and maintains the fluid-tight seal between the fluid channels 85 and the exterior of the inner sleeve 181, and thus also the interior of the bushing 18.

**Figure 4** shows a detail of the bushing 18 near its proximal end, at a radial bearing section 22. At locations along the bushing 18 in which a rotor side radial bearing 21 is present, a gap 183 is arranged between the inner sleeve 181 and the outer sleeve 182. This avoids deformation of the inner sleeve 181 in the radial bearing section 22 by a press fit between the inner sleeve 181 and outer sleeve 182. A sealant 185 can be arranged in the gap 183 around the circumference, establishing a sealing of the region between the inner sleeve 181 and outer sleeve 182. This can prevent the working fluid, in particular corrosive gases, from passing through this region - because the press fit is not necessarily gas-tight - to the electrical motor. The sealant 185 can be present in either one or in both gaps (typically at the two ends of the outer sleeve 182). **Figure 4** further shows a circumferential groove 184 shaped in the outer sleeve 182, for accommodating first radial elastic support 81. An analogous gap 183 and groove 184 are present at the distal radial bearing section 22.

It generally can be the case that that both the gaps and grooves 184 are present at a respective radial bearing section 22. This is because it is desirable to have the radial bearing sections 22 at the end of the rotor body section 29, and to have a long coolant gap 84. Nevertheless, in embodiments not shown it can be the case that the rotor side radial bearing 21 and radial bearing section 22 are further to the right, or the outer sleeve 182 does not reach into the radial bearing section 22, and therefore the gap 183 is not required. Or, the coolant gap 84 is shorter, and one or both grooves 184 do not lie in a radial bearing section 22.

**Figure 5** shows a variant for cooling the bushing 18. The sealing element 186 of the bushing 18 or a closed end of the bushing 18 (see next figure) is in direct contact with the coolant fluid. The sealing element 186 is pressed against an end part 25a of the stator body 25. A round gasket between serves both as a seal for the coolant fluid and as the axially resilient element 188

**Figures 6 through 9** show different embodiments for sealing the distal end of the bushing 18.
- In **Figure 6****,** the bushing 18 is sealed by having an end closure of the inner sleeve 181 integrally shaped with the inner sleeve 181.
- In **Figure 7****,** the sealing element 186 is a **plug** inserted in the distal end of the inner sleeve 181, with a bonding material 189 arranged between radially extended surfaces of the sealing element 186 and inner sleeve 181.
- In **Figure 8****,** the sealing element 186 is a **plug** inserted in the distal end of the inner sleeve 181, with a bonding material 189 arranged between an **inner** circumferential surface of the inner sleeve 181 and an **outer** circumferential surface of the sealing element 186.
- In **Figure 9****,** the sealing element 186 is a **cap** placed over the distal end of the inner sleeve 181, with a bonding material 189 arranged between an **outer** circumferential surface of the inner sleeve 181 and an **inner** circumferential surface of the sealing element 186.

These embodiments comprise the inner sleeve 181. In other embodiments, the sealing element 186 is attached to or part of the outer sleeve 182, or to a combination of the inner and outer sleeve. The closure or sealing element 186 can comprise a channel that leads, through a conduit not illustrated, to the region of the impeller assembly 60. Through this conduit and channel, a flow of process gas through the radial bearing sections can be established.

**Figure 10** very schematically shows part of a structure with a gas-tight seal between the outer side of the bushing 18 and the stator body 25. The seal is established by a layer of adhesive or filler 28 arranged between an outer side of the bushing 18 and an inner side of the stator body 25. This prevents aggressive or corrosive working fluids from reaching the remainder of the bushing 18, the inside of the stator body 25 and the electrical stator 33. The adhesive or filler 28 also can protect the first radial elastic support 81 from the working fluid. In embodiments, the adhesive 28 replaces the first radial elastic support 81.

The adhesive or filler 28 can be epoxy based. Compared to the other mechanical links between the bushing 18 and the stator body 25 (via the inner stator disc 141 or via axial reference surfaces 144 and a circumferential alignment surface 145, see **Figure 11**), and in view of the small relative displacements that need to be absorbed, the adhesive or filler 28 is relatively resilient.

The figure shows the stator body 25 to comprise a stator flange 27 and the stator body 25, the adhesive or filler 28 being arranged between the bushing 18 and the stator flange 27 and the stator flange 27 being removably attached to the stator body 25. This allows to remove the bushing 18 with the stator flange 27 glued to it. The figure is simplified in that other elements, such as the impeller assembly 60, fasteners between the stator flange 27 and main body 26, and between the axial bearing assembly 11 and the stator flange 27, etc. are not shown. In other embodiments, the main body 26 and the stator flange 27 are a single piece.

The end of the bushing is only shown schematically in **Figure 10****.** The sealing and/or cooling of the bushing can be realised as in **Figures 5** to **9****,** and/or as in the embodiments of **Figures 2****,** **11** and **12****.** The location of the electric motor is also not shown. It can be centred, essentially in between radial bearings 21, or it can be overhanging and extending to the right of both bearings 21, as shown in **Figure 2****.**

It can be desirable to protect the inside of the stator body 25 and the electrical stator 33 from aggressive working fluids in structures as shown in the other figures, in which an inner sleeve 181 and outer sleeve 182 are present. In such structures, the following can be implemented:
- The first radial elastic supports 81 can be replaced by a bonding agent that also acts as a sealant. This is of use when the first radial elastic supports 81, e.g. in the form of O-rings, cannot withstand the aggressive working fluid.
- The gap 183 can be sealed by a sealant 185. This is of use when a press fit between the inner sleeve 181 and outer sleeve 182 is not reliably gas-tight.

**Figure 11** shows the bushing 18 being mounted in and aligned to the stator body 25, with the axial bearing assembly 11 being aligned to the bushing 18. Other mechanical connections between the axial bearing assembly 11 and the stator body 25 are resilient, relative to the connection via the bushing 18, through which the alignment is achieved. The position of the bushing 18 in the stator body 25 along the longitudinal axis is defined via axial reference surfaces 144 of the outer sleeve 182 and the stator body 25. These axial reference surfaces 144 extend in a plane normal to the longitudinal axis. The longitudinal axis of the bushing 18 is aligned to the stator body 25 via circumferential alignment surfaces 145 of the outer sleeve 182 and the stator body 25. In the embodiment shown, the circumferential alignment surfaces 145 of the inner sleeve 181 are adjacent to the grooves 184 (see **Figure 4**) accommodating the radial elastic supports, but in other embodiments they can be located elsewhere. However, they preferably are arranged in the region of a corresponding gap 183, so as to avoid deformation of the inner sleeve 181 by radial forces acting on the radial reference surfaces 145.

The axial bearing assembly 11 is pressed against a proximal end of the bushing 18, and the bushing 18 in turn is pressed against the axial reference surface 144 of the stator body 25 by the axial compensation element 83.

A gap between the inner stator disc 141 and the stator body 25 can be sealed by one or more gaskets 146a, 146b. In the embodiment shown, an outer gasket 146a and an inner gasket 146b are arranged concentric to one another. The outer gasket 146a separates the working fluid from fluid channels 85 for cooling the inner stator disc 141. The inner gasket 146b separates the fluid channels 85 from a volume 147 that can be exposed to the working fluid.

**Figure 12** shows an electrical machine with a centred motor design. With such a design, when seen along the axis of rotation, the motor section 23 is located between the radial bearing sections 22 or - as shown in **Figure 12** - overlapping at least one of the radial bearing sections 22. The elements are essentially the same as in the previously described embodiments, but with different geometric relations. The motor section 23 overlaps the overall radial bearing section 19. The inner sleeve 181 extends along the motor section 23 and serves as a gap tube. The outer sleeve 182 extends along at least part of a remaining section that remains between the motor section 23 and the axial bearing assembly 11. The coolant gap 84 and cooling section 24 extend along a correspondingly shorter section of the remaining section. Heat generated in the radial bearing section 22 that overlaps the motor section 23 is transported away on one side through the inner sleeve 181 to the outer sleeve 182, and on the other side through the inner sleeve 181, sealing element 186 and heat transfer element 187.

While the invention has been described in present embodiments, it is distinctly understood that the invention is not limited thereto, but may be otherwise variously embodied and practised within the scope of the claims.

## Claims

1. An electrical machine comprising a stator (1) with a **stator body** (25) supporting an electrical stator (33) and a rotor (5), the rotor (5) being supported by means of a bearing comprising at least one **radial bearing section** (22) forming a radial **gas** bearing and an **axial bearing section** (32) forming an axial gas bearing, the stator side parts of these bearing sections comprising an **axial bearing assembly** (11) and a **bushing** (18), the electrical machine comprising a longitudinal axis coinciding with an axis of rotation of the rotor (5),
wherein the bushing (18) comprises an **inner sleeve** (181) and an **outer sleeve** (182),
• the inner sleeve (181) being made of a material having a low **CTE** (coefficient of thermal expansion), the CTE being lower than 7E-6 K^-1, in particular lower than 5E-6 K^-1, in particular lower than 4E-6 K^-1;
• the outer sleeve (182) being made of a material having a **tensile strength** higher than 50 MPa,
and/or having an elongation at break higher than 2%.

2. The electrical machine of claim 1, wherein one or more of the following is the case:
• the inner sleeve (181) is made of a **ceramic-type material,** in particular SiC or Si₃N₄, ;
• the outer sleeve (182) is made of a **metal-type material,** in particular aluminium, titanium or steel, in particular stainless steel;
• the outer sleeve (182) is made of a **plastic-type material,** in particular PEEK or fiber-reinforced plastic.

3. The electrical machine of one of the preceding claims, wherein in a radial bearing section (22) along the bushing (18), a corresponding **circumferential gap** (183) is present between the inner sleeve (181) and outer sleeve (182),
*in particular* wherein at least one of the following is the case:
• the gap (183) is adjacent to an end of the outer sleeve (182);
• the gap (183) is filled with a sealant material (185), establishing a sealing of a region between the inner sleeve (181) and outer sleeve (182).

4. The electrical machine of one of the preceding claims, wherein the outer sleeve (182) has a thickness of at most five Millimetres.

5. The electrical machine of one of the preceding claims, wherein the outer sleeve (182) is shaped to have at least one outer **circumferential groove** (184), with a radial elastic support (81, 82) arranged in the groove.

6. The electrical machine of one of the preceding claims, wherein
• the bushing (18) extends along the longitudinal axis of the electrical machine,
• in a first section along the axis the outer sleeve (182) is present,
• in a second section along the axis the outer sleeve (182) is not present, and
• the inner sleeve (181) extends along the first and the second section and in the second section serves as a gap tube between the electrical stator (33) and the rotor (5).

7. An electrical machine, in particular according to one of the preceding claims, comprising a stator (1) with a **stator body** (25) supporting an electrical stator (33) and a rotor (5), the rotor (5) being supported by means of a bearing comprising at least one **radial bearing section** (22) forming a radial **gas** bearing and an **axial bearing section** (32) forming an axial **gas** bearing, the stator side parts of these bearing sections comprising an **axial bearing assembly** (11) and a **bushing** (18), the electrical machine comprising a longitudinal axis coinciding with an axis of rotation of the rotor (5), wherein
• the bushing (18) is rigidly attached to a **reference body** (143),
• the reference body (143) is aligned with the stator body (25),
• all connections between the bushing (18) and the stator body (25) other than the connection through the reference body (143) are elastic supports,
• for forming a gas-tight seal between the outer side of the bushing (18) and the stator body (25), a layer of adhesive or filler (28) is arranged between an outer side of the bushing (18) and an inner side of the stator body (25), along the circumference of the bushing (18) and in a region adjacent to the axial bearing section (32).

8. The electrical machine of claim 7, wherein the stator body (25) comprises **a main body** (26) and a **stator flange** (27), the stator flange (27) being removably attached to the main body (26), and the layer of adhesive or filler (28) being arranged between the outer side of the bushing (18) and an inner side of the stator flange (27).

9. The electrical machine of one of the preceding claims, wherein, for containing a working fluid present inside the bushing (18), the bushing (18) is at one end closed, by means of a closure, in a gas-tight manner with respect to a volume surrounding that end of the bushing (18).

10. The electrical machine of claim 9, wherein the closure of the bushing (18) is formed integrally with the bushing (18).

11. The electrical machine of claim 9, wherein the closure of the bushing (18) is formed with a **sealing element** (186), *in particular* wherein the sealing element (186) is one of
• a removable plug;
• a plug bonded to the bushing (18).

12. The electrical machine of one of the preceding claims, comprising a **heat transfer element** (187) arranged to transfer heat away from the bushing (18), the heat transfer element (187) being pressed against the bushing (18) along the longitudinal axis by means of an **axially resilient element** (188).

13. The electrical machine of claim 12, wherein a contact surface between the bushing (18), or a sealing element (186) attached to the bushing (18), and the heat transfer element (187) is substantially flat and at a right angle to the longitudinal axis.

14. The electrical machine of claim 12 or 13, wherein at least one of the following is the case:
• the heat transfer element (187) is cooled by a flow of coolant medium;
• the heat transfer element (187) is thermally coupled to the stator body (25) by a heat conducting filler or fluid;
• the heat transfer element (187) is thermally coupled to the stator body (25) by a heat conducting elastic foil.

15. The electrical machine of one of the preceding claims, wherein the bushing (18) is radially surrounded by the stator body (25), and
• a **coolant gap** (84) is present between the bushing (18) and the stator body (25) in a longitudinal section along the bushing (18) in which the outer sleeve (182) is present, *preferably* with the coolant gap (84) extending around the entire circumference of the bushing (18),
• fluid channels (85) are arranged to provide a flow of a fluid **coolant medium** through the coolant gap (84);
in particular wherein the coolant gap extends along at least 60% or 70% or 80% or 90% or 100% of an **overall bearing section** (19) **of the bushing** (18), the overall bearing section (19) of the bushing being defined as a shortest section along the rotor axis comprising all radial bearing sections (22).
